# EUROPEAN PATENT SPECIFICATION

(11) **EP 0 741 060 B1**
(45) Date of publication and mention of the grant of the patent: **17.10.2001**
(21) Application number: 96106833.5
(22) Date of filing: 30.04.1996
(51) Int. Cl.: B60R 16/04

(54) **Battery powered motor scooter and battery exchange device**
Batterieangetriebenes Motorrad und Batteriewechseleinrichtung
Motocyclette à batterie et dispositif d'échange de batterie

(30) Priority: 01.05.1995 JP 13100795
(43) Date of publication of application: 06.11.1996
(73) Proprietor: YAMAHA HATSUDOKI KABUSHIKI KAISHA, Iwata-shi Shizuoka-ken, 438 (JP)
(72) Inventor: Trigg, Robert V., c/o Yamaha Motor Europe N.V., 1119 NC Schiphol-Rijk (NL); Kuijpers, Jeroen N.M, c/o Yamaha Motor Europe N.V., 1119 NC Schiphol-Rijk (NL)
(74) Representative: Grünecker, Kinkeldey, Stockmair & Schwanhäusser Anwaltssozietät

(56) References cited:
- EP-A- 0 648 633
- FR-A- 2 532 897
- FR-A- 2 709 455

## Description

The present invention relates to a battery powered motor scooter having a low deck portion extending between the front and rear wheels of the scooter, and a battery housing in said low deck portion to receive at least one battery, and to a battery exchange device for the motor scooter.

Such a battery powered motor scooter is known from EP-A-0 648 633, forming the preamble of claim 1.

In a scooter type motorcycle or a auto three-wheeler having a low deck portion for a step (foot deck) formed between a handle bar and a seat, and a power unit including a drive source and a transmission and connected for swinging movement, as a swing arm for a rear wheel, to the body frame, utilization of an electric motor using batteries mounted on a vehicle body as a power source has been considered as a drive source contained within a power unit.

Document FR-A-2 532 897 shows that a battery housing is mounted about a pivot near its forward end. Moreover, there is provided a battery entrance at its rear end to allow access to said at least one battery, when the battery housing takes an upwardly turned position.

When batteries used as a power source for an electric motor are mounted on a body in the motor scooter described above, a space under the seat which is covered by a body cover may be considered as a room for the batteries. Often a controller is arranged close to the seat. As it is not advisable to dispose batteries near the controller, the low deck portion has been considered as a setting space for a battery housing.

If the battery housing is formed in a the low deck portion of the scooter the changing of the batteries which are heavy in weight has to be carried out in a low bent posture. The handling of heavy objects in that posture is difficult, inefficient and can cause damage to the back of an operator.

The object of this invention is to solve the problems associated with a conventional motor scooter described above and more particularly, to provide a motor scooter in which batteries can easily be exchanged in a high posture. Another object of this invention is to provide a battery exchange device for the motor scooter to facilitate the changing of the batteries.

To accomplish the objects above there is provided a battery powered motor scooter of the type mentioned in the opening paragraph wherein the battery housing is mounted about a pivot near its forward end, and provided with a battery entrance at its rear end to allow access to said at least one battery when the battery housing takes an upwardly turned position and that said battery housing is connected to a seat frame carrying said seat to rotate together.

Moreover, there is provided a battery exchange device which comprises a movable carrier body on which a support frame is pivotably mounted, said support from having connecting means to detachably connect said support frame to the rear end of said battery housing.

According to the invention of claim 1, when a battery housing is turned upwardly with a part near the forward end as a turning center, an entrance for batteries at the rear end of the housing can be opened rearwardly at a position higher than that of a low deck portion of the vehicle body so that the batteries can be handled from behind the body in a easy posture.

Moreover, since the battery housing is connected to a seat frame carrying said seat to rotate together, it is possible that when an appropriate position near the seat is gripped to be lifted up, the battery housing at a low position can be turned upwardly to enable access to the battery entrance in an easy posture.

According to another embodiment an empty space is provided under the seat. The space is opened wide under the seat so that an operation space can be kept wide at the time of opening the entrance of batteries, thereby facilitates operations in getting in and out of the batteries to the housing.

According to another embodiment, a space for housing articles can be secured under the seat and a bag will move upwardly in association with the seat at the time of upward turning of the battery housing so that opening of the entrance of the batteries is not prevented.

According to another embodiment, a battery box carrying at least one battery is slideably guided in the battery housing, the battery box being movable in and out through the battery entrance. Thus, the weighty battery box containing, for example, a plurality of batteries can be taken out from the battery housing by a small force without friction resistance.

Further advantageous embodiments of the invention are laid down in the subclaims.

A preferred embodiment of a motor scooter and a battery exchange device for the motor scooter according to the invention will be described below with reference to accompanying drawings:

Fig. 1 is a side view showing the fundamental structure of an embodiment of a motor scooter according to the invention.

Fig. 2 is a plan view showing the structure of the frame provided in the battery housing in the embodiment of Fig. 1.

Fig. 3 is a plan view showing the structure of the seat frame in the embodiment of Fig. 1.

Fig. 4 is a side view showing the connecting structure of the main frame and the power unit in the embodiment of Fig. 1.

Fig. 5 is a plan view of the connecting structure of the main frame and the power unit shown in Fig. 4.

Fig. 6 is a side view showing another example of the connecting structure of the main frame and the power unit in a motor scooter.

Fig. 7 is a plan view of the connecting structure of the main frame and the power unit shown in Fig. 6.

Fig. 8 is a sectional illustration taken along line A-A of Fig. 1, of the battery housing of the embodiment shown in Fig. 1

Fig. 9 is a side illustration of the arrangement of the bag for storing articles being attached to the motor scooter shown in Fig. 1.

Fig. 10 is a sectional illustration of the arrangement of the bag shown in Fig. 9.

Fig. 11 is a side view of the motor scooter shown in Fig. 1, with the battery housing being held at the upwardly turned position.

Fig. 12 is a side view of an essential part of the battery housing being held at the upwardly turned position shown in Fig. 11.

Fig. 13 is a illustration showing the relation between the grip provided at the rear of the seat frame, the control lever of the locking mechanism and the position holding mechanism, and the wire connected to the control lever in the embodiment of Fig. 1.

Fig. 14 is a side view showing the locking mechanism of the main frame and the housing frame, in the embodiment of Fig. 1, being locked.

Fig. 15 is a side view showing the locking mechanism, in the embodiment of Fig. 1, being unlocked.

Fig. 16 is a side view showing the position holding mechanism of the housing frame in the embodiment of Fig. 1.

Fig. 17 is a plan view of the position holding mechanism shown in Fig. 16.

Fig. 18 is a side view showing the housing frame being held at the upwardly turned position, corresponding to the position holding mechanism of Fig. 16.

Fig. 19 is a side view showing the auxiliary device for a motor scooter of this invention being connected to the motor scooter of Fig. 1.

Fig. 20 is a side view showing an embodiment of the auxiliary device for a motor scooter of this invention.

Fig. 21 is a back view of the auxiliary device for a motor scooter of Fig. 20.

Fig. 22 is a plan view showing the frame for supporting the battery box in the auxiliary device for a motor scooter of Fig. 20.

Fig. 23 shows (A): an illustration of the connector and the stopper member, (B): a plan view of the stopper control mechanism, (C): a sectional view taken along line A-A of Fig. 22, (D): a sectional view taken along line B-B of Fig. 22, and (E): a sectional view taken along line C-C of Fig. 22.

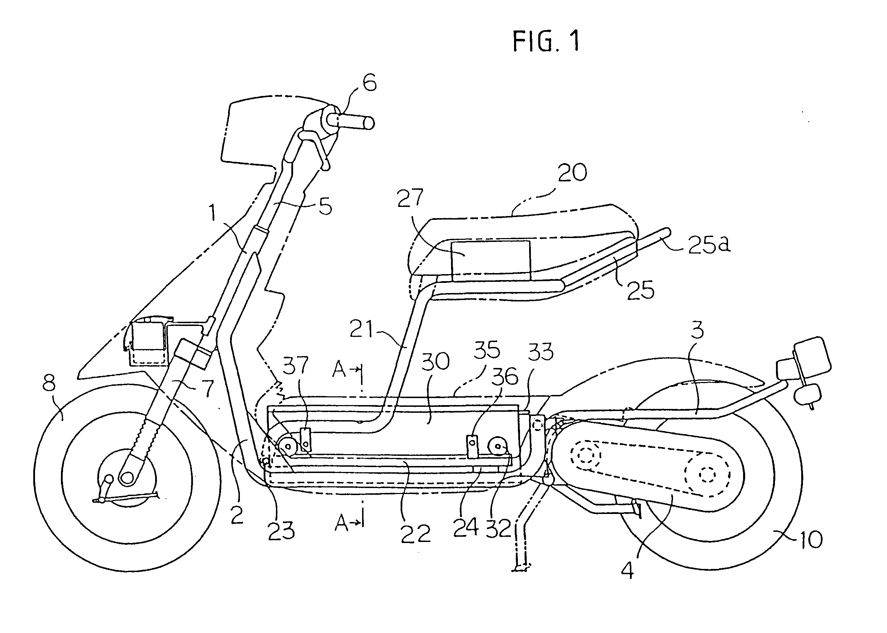

Figs. 1 through 3 show a motor scooter according to the preferred embodiment of this invention. To a head pipe 1 supporting a steering of the scooter for rotation is fixed integrally the forward end of a main frame 2 of the vehicle body, and to the rear end of the main frame 2 is connected integrally a rear frame 3 extending toward the rear and also a power unit 4 including a motor and a transmission for swinging movement.

The steering supported by the head pipe 1 comprises a steering shaft 5 passing through the head pipe 1, a handle bar 6 fixed to the upper end of the steering shaft 5, and a front fork 7 connected to the lower end of the steering shaft 5, the lower end of which is supported a front wheel 8 for rotation.

The main frame 2 is made up of a pair of right and left members. When viewed in profile with the right and left members overlapping each other as shown in Fig. 1, the main frame 2 extends downwardly and rearwardly from the forward end portion fixed to the head pipe 1, then is bent rearwardly to extend horizontally for a certain distance, and then bent again upwardly at the end portion, said long extending horizontal portion constituting a low deck portion of the vehicle body.

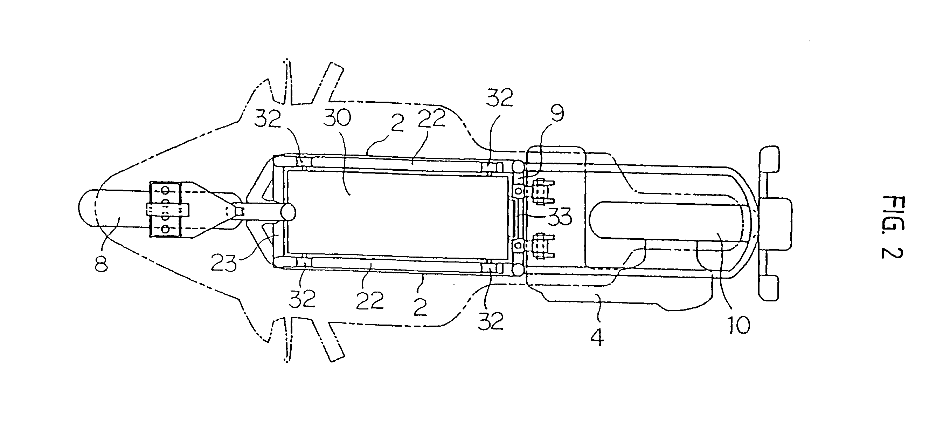

When the main frame 2 is viewed in plan as shown in Fig. 2 of 3, the right and left members diverge laterally gradually around the downward extending portion adjacent to the forward end portion fixed to the head pipe 1 and run in parallel in spaced relation at the horizontally extending portion corresponding to the low deck portion and at the rear end portion, a cross pipe 9 being connected to the rear ends of the laterally spaced members.

The power unit 4 connected for swinging movement to the rear end to the main frame 2 contains a motor and a transmission, and near the rear end of the power unit 4 is supported, for rotation in a cantilever, a rear wheel 10 driven by the motor through the transmission.

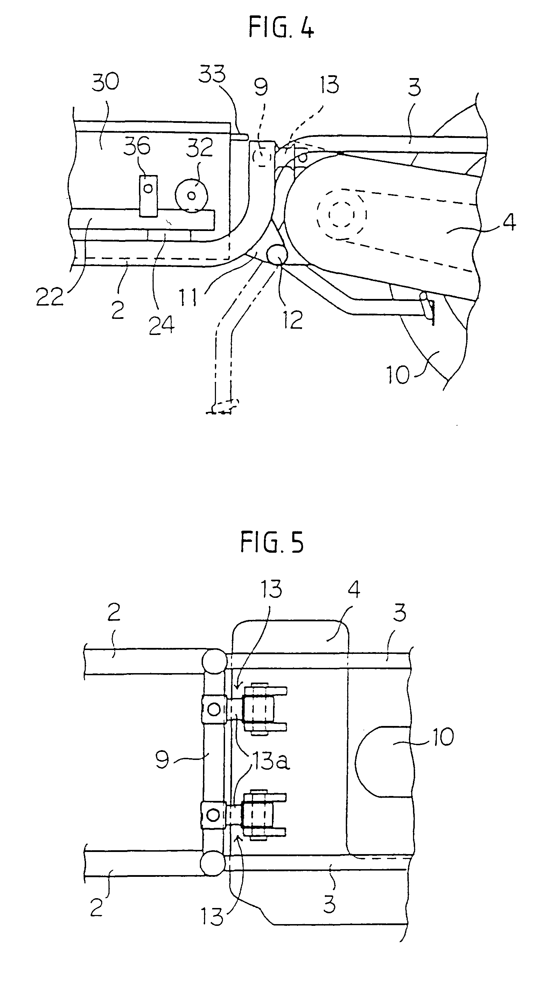

As for the connection of the power unit 4 to the main frame 2, in each of the right and left members of the main frame 2, the forward end lower portion of the power unit 4, as shown in Fig. 4 and 5, is connected for swinging movement by a shaft 12 to the upwardly bent rear end of the main frame 2 through a bracket 11 fixed to the lower portion of the rear end, and a shock absorbing connector 13 with an elastic portion 13a such as rubber in its middle portion is provided between the forward end upper portion of the power unit 4 and the cross pipe 9.

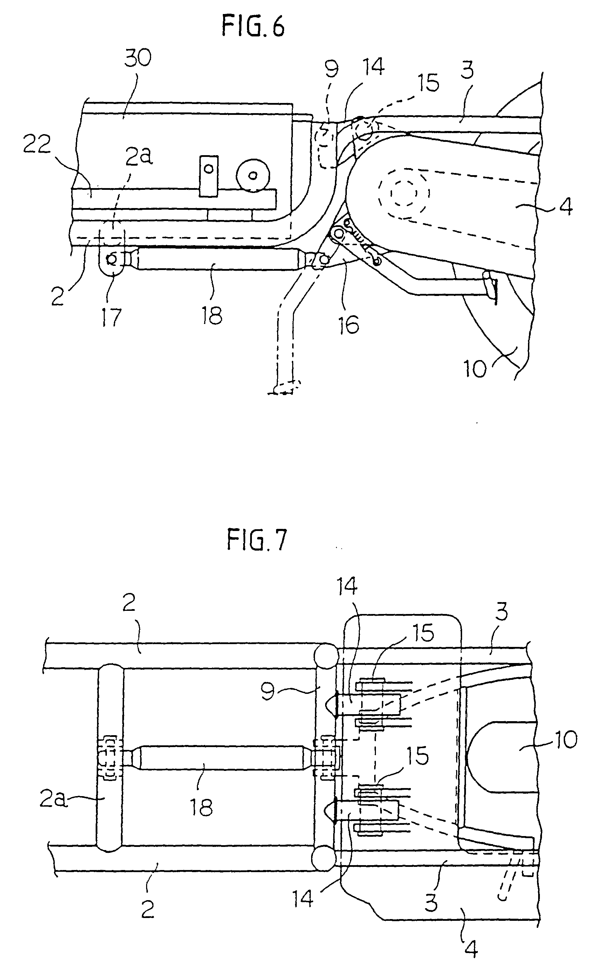

While, in this embodiment, the foregoing connecting structure of the power unit is selected, embodiments using other appropriate means may be practiced. For example, as shown in Fig. 6 and 7, the forward end upper portion of the power unit 4 may be connected, for swinging movement through a shaft 15, to a connector 14 welded to the cross pipe 9, and a shock absorber 18 may be fitted through brackets 16 and 17 between a cross frame 2a provided in the middle of the main frame 2 and the forward end lower portion of the power unit 4.

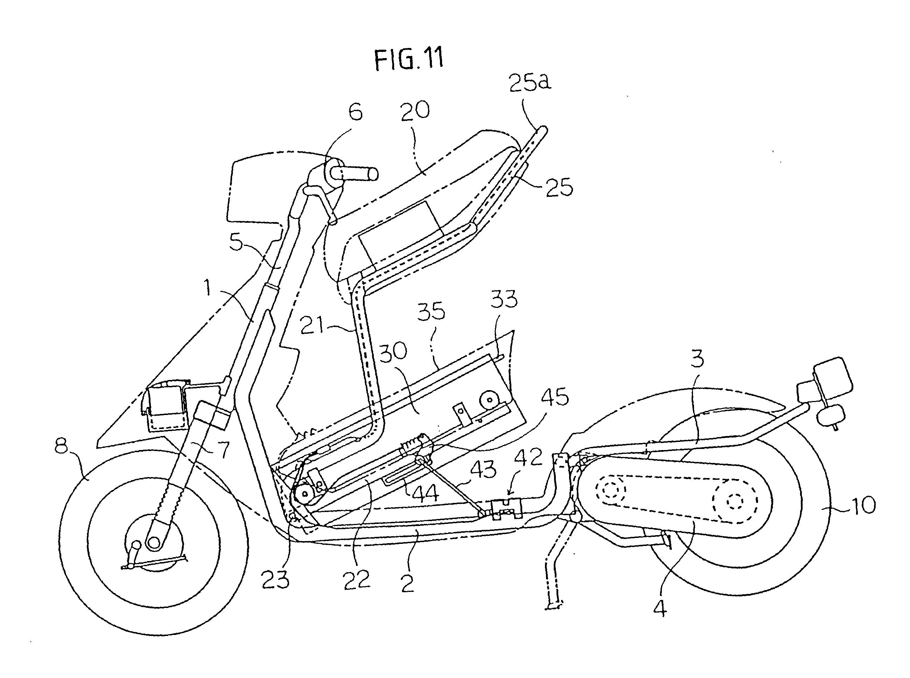

In the motor scooter having a structure described above, near the bent portion of the main frame 2 between the downwardly extending portion and the horizontal portion, the forward end of a seat frame 21 for fixing a seat 20, and the forward end of a housing frame 22 for supporting a battery box containing batteries, as shown in Fig. 11, are connected to the main frame 2 for turning movement by a common turning shaft 23 in such a manner that both frames can be turned intagrally.

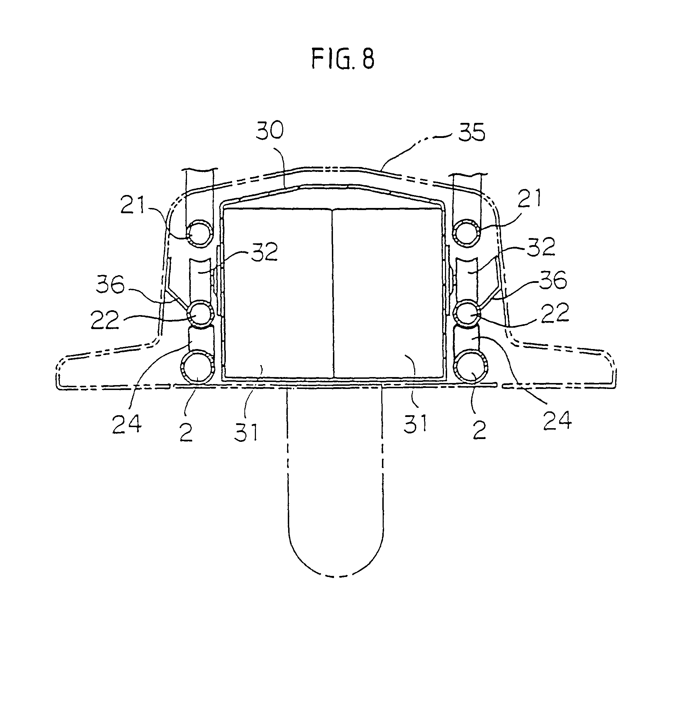

The housing frame 22 is made up of a pair of right and left hollow pipes spaced from each other fixed to the turning shaft 23 at their forward ends and located at a position a little higher than that of the horizontal portion of the main frame 4, the right and left members being disposed in parallel with a space to each other so as to be approximately in coincidence with the horizontal portion of the main frame 4 when viewed in plan as shown in Fig. 2. The rear portions of both members of the housing frame 22, as shown in Fig. 8, are placed on receivers 24 formed on the upper face of the main frame 4.

The seat frame 21, in plan view, is in the shape of a letter U with its right and left portions connected at the rear ends, and in profile, takes the shape of the middle portion rising stepwise; to the rear end of the seat frame 21 is further connected integrally a rear seat frame 25 extending rearwardly and upwardly, the rear end of which protrudes further rearward than that of the seat 20 and acts as a grip 25a at the time of upward turning of the seat frame 21.

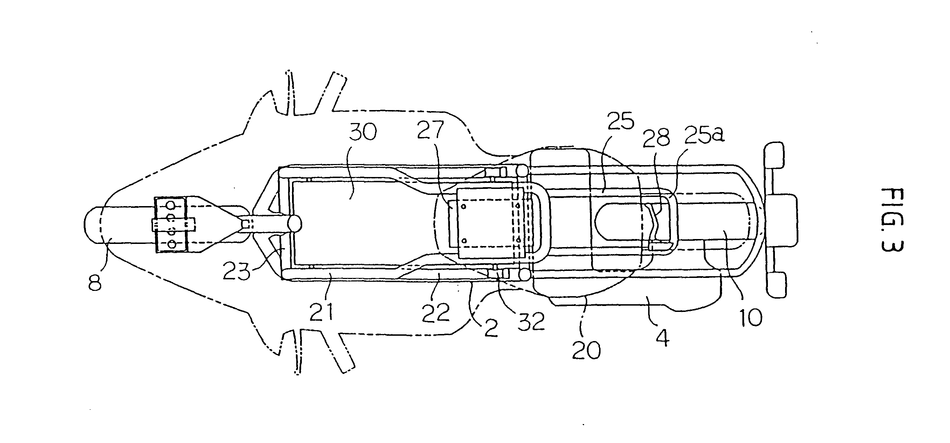

When viewed in plan, the front portion of the seat frame 21 or the portion below the rising portion of the seat frame 21, as shown in Fig. 3, is shaped so as to be approximately in coincidence with the housing frame 22, with the right and left members located in parallel in spaced relation with each other, and a space for a battery box 30 is formed between the two members.

In this embodiment, a controller 27 is disposed in a space between the rear portion of the seat frame 21 or the horizontal portion above the rising portion and the bottom of the seat 20.

The battery box 30, provide with a handle 33 at the rear end, contains a plurality of batteries 31 as shown in Fig. 8. The box has rollers 32 at the front and rear portions on both sides, respectively, and is supported on the housing frame 22 through the rollers 32 mounted on the housing frame 22 acting as a rail portion.

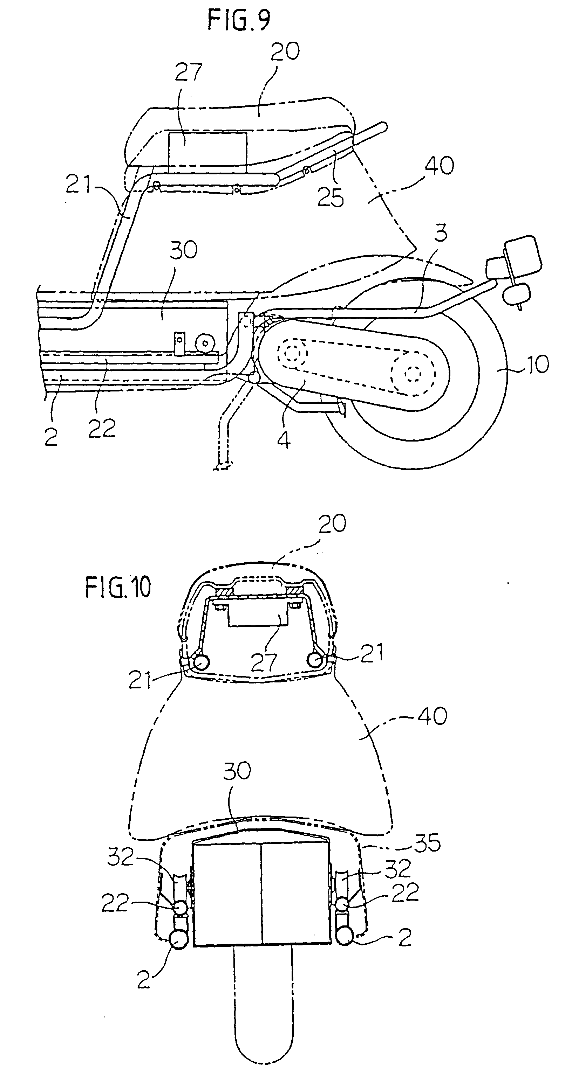

The battery box 30, supported on the housing frame 22, is covered with a cover member 35 of the low deck portion, which is fixed to the housing frame 22 and seat frame 21 through fixing members 36 and 37 and as shown in Fig. 9, can be turned upwardly, integrally with the housing frame 22 and seat frame 21 when the housing frame 22 is turned upwardly.

That is, the housing of the battery box 30 is defined by the cover member 35 and the housing frame 22. The housing of the battery box 30 is adapted to be turned upwardly with a part near the forward end as a turning center, and the rear end of the housing will be opened rearwardly as an entrance of the battery box 30 through the upward turning movement.

According to a motor scooter of the embodiment having a battery box 30 housing described above, in spite of the battery box 30 housing portion being provided in the low deck portion of the vehicle body, the entrance of the battery box 30 is opened rearwardly at a high position so that the battery box 30 can be handled in relatively easy posture.

In addition, according to a motor scooter of this embodiment, under the seat 20 fixed to the seat frame 21 is provided a space around which no obstacle exists so that as shown in Fig. 9 and Fig. 10, a bag 40 for storing articles can be disposed in the space under the seat 20.

In this case, when the bag 40 is attached to the seat 20 or the seat frame 21, the bag 40 is moved upwardly at the time of upward turning of the seat frame 21 etc. so that the entrance can be opened without hindrance at the time of upward turning of the battery box housing.

Also, if the bag 40 is adapted to be detachable from the seat 20 or the seat frame 21, the bag 40 can be used for itself separately in addition to the usage as an attachment of the vehicle body.

In the motor scooter of this embodiment, the housing frame 22 of the battery box housing is locked to the main frame 2 so as not to turn upwardly in a normal condition, and adapted to be turned upwardly, relatively to the main frame 2 when unlocked at the time of getting in and out the battery box 30, and to be locked temporarily at the upwardly turned position.

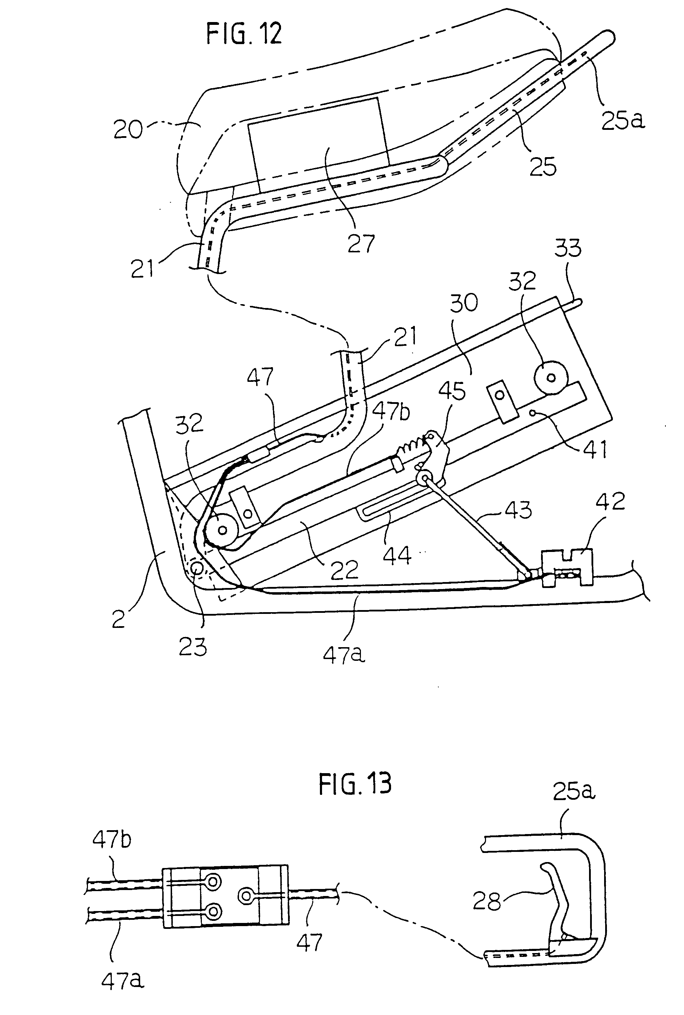

As a specific structure according to this embodiment, as shown in Fig. 12, with regard to the main frame 2 and the housing frame 22, in order to lock the housing frame 22 to the main frame 2, a locking mechanism made up of a locking pin 41 and a locking pin engaging portion 42 is provided, and also to hold the housing frame 22 temporarily in the upwardly turned position, a position holding mechanism made up of a support 43, a guide member 44, and a unlocking member 45 is provided.

To control the locking mechanism and the position holding mechanism, control wires 47a and 47b connected to the respective mechanisms are put together in a bundle on the way, extend to the grip 25a through the seat frame 21 and the rear seat frame 25, and as shown in Fig. 13, are connected to a control lever 25 provided on the grip 25a.

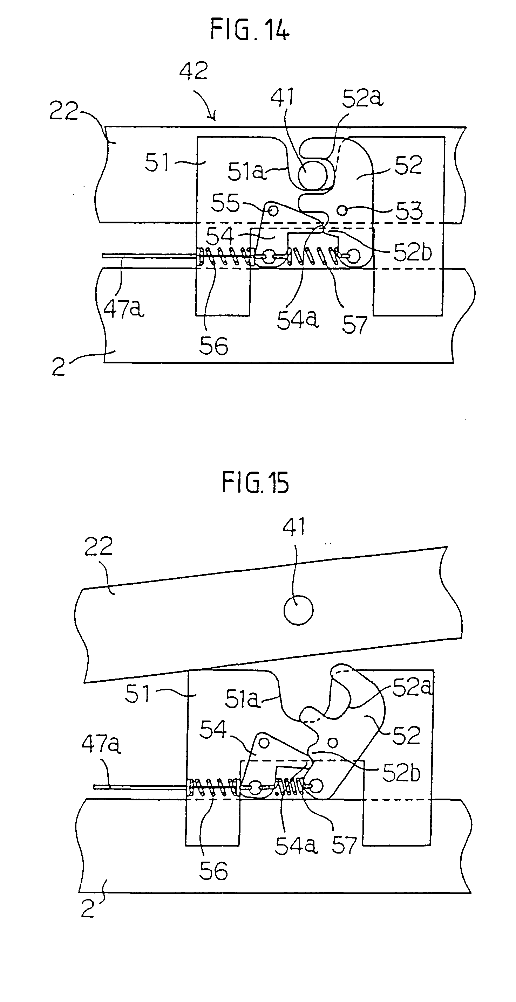

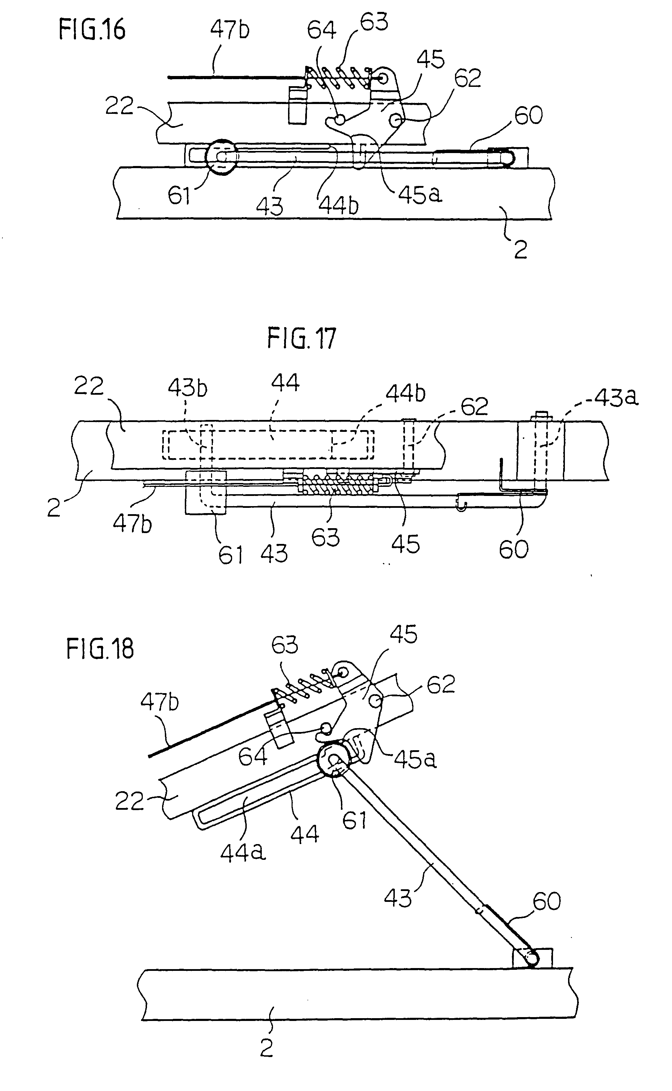

As for the locking mechanism for locking the housing frame 22 to the main frame 2, as shown in Fig. 14 and Fig. 15, a lock pin 41 projects on the side face of the housing frame 22, and a base member 51 formed with a recess 51a for receiving the lock pin 41 is fixed, as the lock pin engaging portion 42 on the main frame 2, to the main frame 2.

On the base member 51, a pin engaging member 52 formed with a engaging recess 52a for engaging the lock pin 41 is pivotally mounted on a shaft 53, and a pusher 54 formed with a projection 54a for contacting a projection 52b of the pin engaging member 52 is pivotally mounted on a shaft 55. The control wire 47a is connected to the pusher 54, a compression spring 56 is provided between the base member 51 and the pusher 54, and a tension spring 57 between the pusher 54 and the pin engaging member 52.

In such a locking mechanism, if the wire 47a is pulled through control lever 28 operation when the mechanism is in a locking state shown in Fig. 14, the pusher 54 is turned against the bias of the compression spring 56 and a contact state between the projection 54a of the pusher 54 and the projection 52b of the pin engaging member 52 is unlocked so that the pin engaging member 52 is turned by the bias of the tension spring 57 and a state is brought about in which the lock pin 41 is able to get out of the engaging recess 52a and the housing frame 22 can be turned upwardly.

After the housing frame 22 is turned upwardly, as shown in Fig. 15, the turning state of the pin engaging member 52 is maintained by the bias of the tension spring 57, and the projection 54a of the pusher 54 is fitted in a portion below the projection 52b of the pin engaging member 52, whereby the unlocking state is maintained.

If the housing frame 22 is turned downwardly when the locking mechanism is in a unlocking state shown in Fig. 15, the locking pin 41 strikes against the engaging recess 52a to push the pin engaging member 52 downwardly so that the pin engaging member 52 is turned against the bias of the tension spring 57 in the direction opposite to that at the time of unlocking, and the bias of the compression spring 56 causes the projection 54a of the pusher 54 to engage the projection 52b of the pin engaging member 52 again, whereby the mechanism returns to the original locking state automatically.

As for the position holding mechanism for holding the housing frame 22 in a upwardly turned position, as shown in Fig. 16 through Fig. 18, to the main frame 2 is connected for pivotal movement an end of the support 43, and to the housing frame 22 are provided the guide member 44 for guiding and engaging the other end of the support 43 as well as the unlocking member 45 for releasing the locking state between the guide member 44 and the support 43.

The support 43, as shown in Fig. 17, is a rodlike body with both ends bent perpendicularly in the same direction, and one bent end portion 43a is connected for pivotal movement to the upper face of the main frame 2. A spring 60 is interposed between the main frame 2 and the support 43 so that the support 43 is biased in a rising direction.

The guide member 44 is made of narrow band plate, which is bent to form a long narrow space 44a with open sides. One end portion 44b of the plate attached to the bottom face of the housing frame 22, constitutes the engaging portion of the support 43.

In the guide space 44a of the guide member 44 is fitted the forward end or the other bent end portion 43b of the support 43 from outside, and near the bent portion of the support 43 outside the guide space 44a is fixed a contact member 61 of a circular vertical cross section.

The unlocking member 45 is pivotally mounted on a shaft 62 on one side of the housing frame 22; to one end of the unlocking member 45 is connected the control wire 47b and a compression spring 63 is provided between said one end of the unlocking member 45 and the housing frame 22; in the lower side of the unlocking member is formed a recess 45a of the shape of a letter V. A projection 64 provided on the side face of the housing frame 22 restricts the turning movement of the unlocking member due to the bias of the compression spring 63.

In the position holding mechanism made up of several members described above, when the locking mechanism is unlocked through control lever 28 operation and the housing frame 22 is turned upwardly from the position shown in Fig. 16 to the upper limit position shown in Fig. 18, the bent end portion 43b of the support 43 raised by the bias of the spring 60 moves along the guide space 44a of the guide member 44 and is engaged with the engaging portion 44b of the guide member at the position where the contact member 61 comes into contact with the recess 45a of the unlocking member 45, whereby the housing frame 22, being supported by the support 43, is held at the upwardly turned position.

When the housing frame 22 held at the upwardly turned position described above, is returned to the position shown in Fig. 16, the wire 47b is pulled through control lever 28 operation. Then, the unlocking member 45 is turned against the bias of the compression spring 63 and the recess 45a of the unlocking member 45 pushes down the contact member 61 of the support 43 so that the locking state between the engaging portion 44b of the guide member 44 and the bent end portion 43b of the support43 is released, whereby the housing frame 22 can be turned downwardly against the bias of the spring 60 on the support 43.

According to the locking mechanism and the position holding mechanism described above, when the grip 25a extending rearwardly from the seat 20 is raised with the control lever 28 being gripped, the locking mechanism of the main frame 2 and the housing frame 22 is unlocked so that the housing of the battery box 30 can be turned upwardly together with the seat frame 21 and held at the upwardly turned position.

When pulled out from the entrance of the battery box housing held in a locking position by gripping the handle 33 fixed at its rear end, the battery box can be taken out from the housing in a relatively easy posture, without frictional resistance because of the rollers 32 on the battery box 30 rolling on the housing frame 22 acting as a rail portion.

When the grip 25a extending reawardly from the seat 20 is pushed down with the control lever 28 being gripped after the battery box is putted in the housing held at the upwardly turned position, the position holding mechanism of the main frame 2 and the housing frame 22 is unlocked so that the battery box housing can be turned downwardly together with the seat frame 21, and the housing frame 22 can be locked to the main frame 2 by removing hands from the control lever 28 after it has been returned to the normal position.

In the motor scooter of this embodiment described above, since the housing of the battery box 30 can be turned upwardly and held in a locking position, the battery box 30 can be got in and out in a easy posture. However, when the battery box 30 itself to be handled contains a plurality of batteries 31 and has a considerable weight, it requires a lot of labor to carry the battery box to a given place after taking out from the housing or to bring it back to the entrance of the housing.

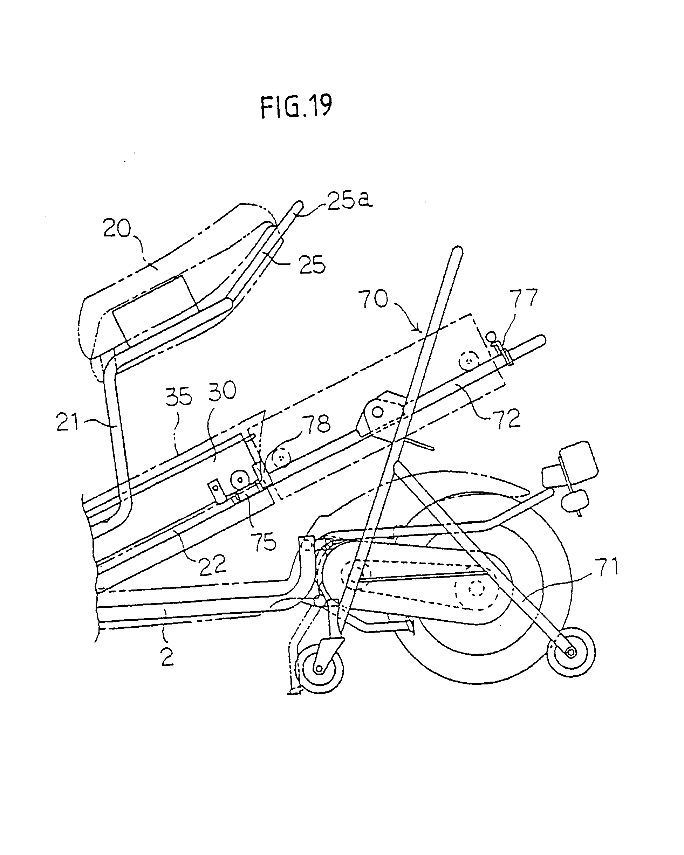

In this regard, in the motor scooter of this embodiment having a housing frame 22 in the housing of the battery box 30, as shown in Fig. 19, utilization of an auxiliary device 70 as a carrier will provide easier handling operations in getting in and out of the battery box to the housing, or carriage of the same.

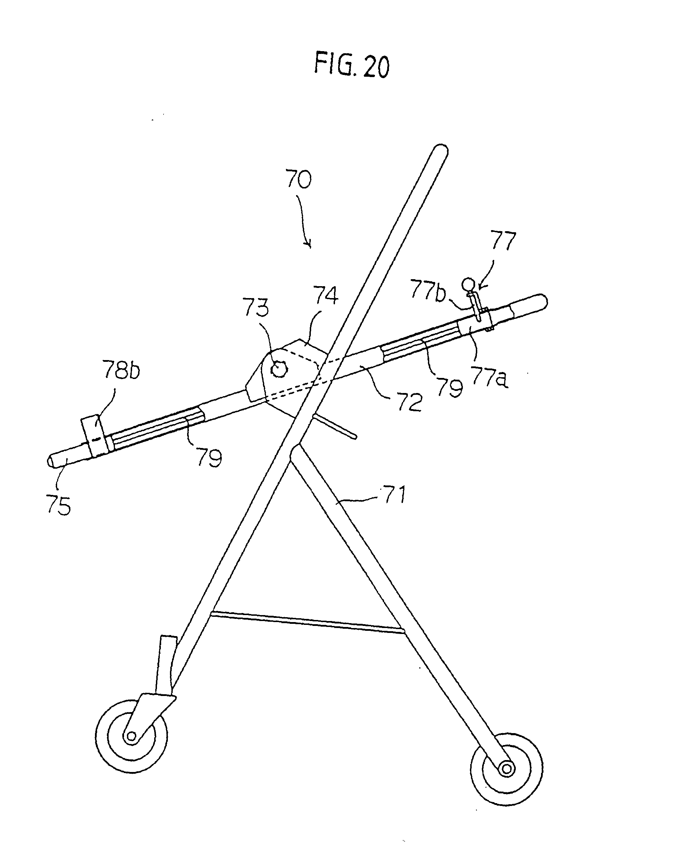

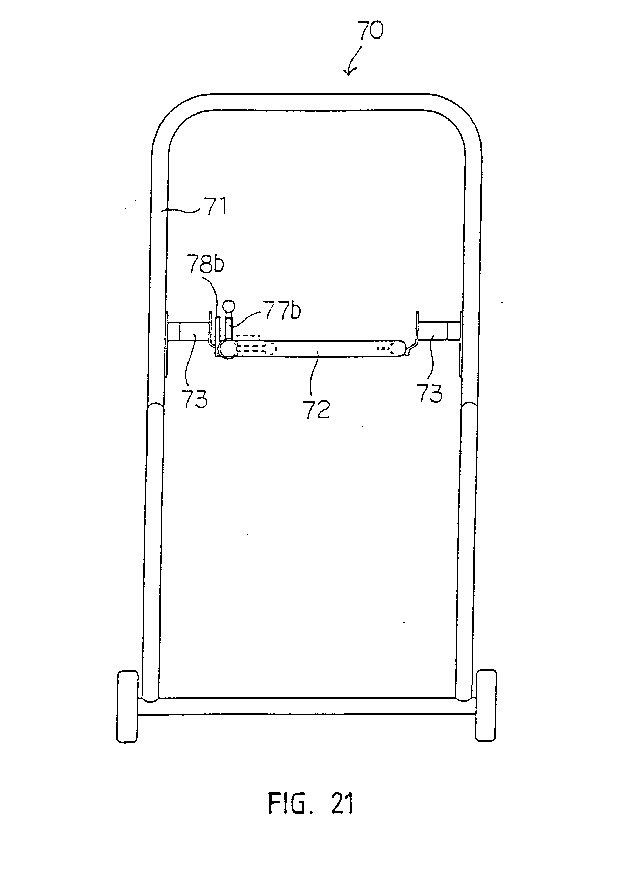

Fig. 20 and Fig. 21 show the overall structure of the auxiliary device 70 for use in a motor scooter of this embodiment. The auxiliary device 70 for a motor scooter made up of a carrier body 71 with wheels and a support frame 72 for supporting the battery box 30 connected for swinging movement to the carrier body 71.

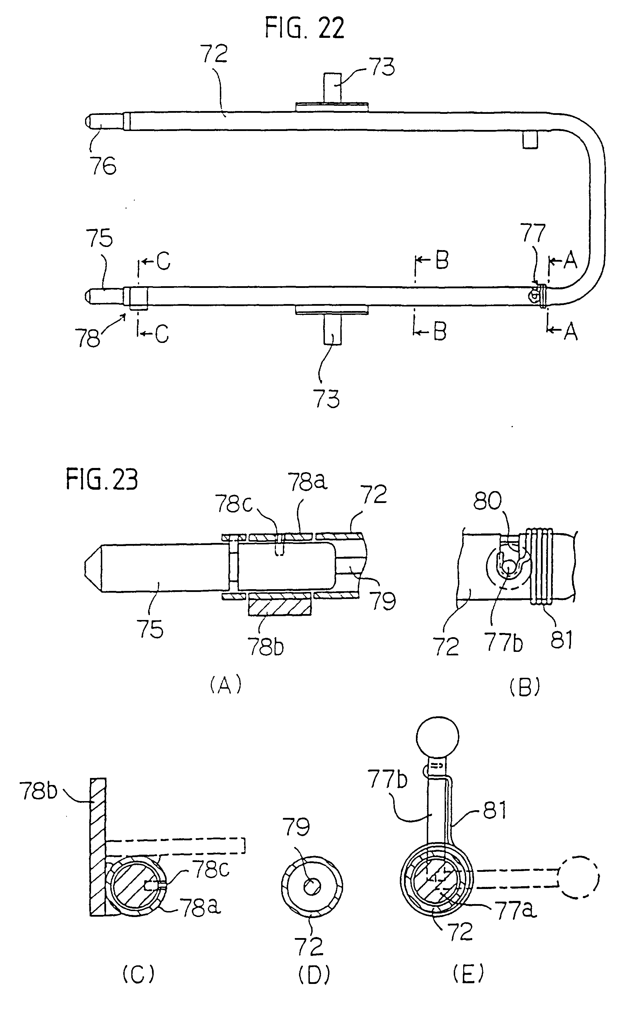

The support frame 72, as shown in Fig. 22, takes the form of approximately a letter V in which right and left portions spaced in parallel are connected at the rear ends integrally, the distance between right and left portions being the same as that in the housing frame 22 of the motor scooter, and the battery box 30 is supported through rollers 32 on the parallel right and left portions acting as rail portions.

The support frame 72 is provided, near its middle section, with mounting shafts 73 on the outer sides of the right and left portions, respectively, and the support frame 72 is connected by connecting shafts 73 for swinging movement to the carrier body 71 through brackets 74.

The support frame 72 is provided, at its forward ends, with connectors 75 and 76 insertable to the rear portions of the housing frame 22 of the motor scooter, and the connector 75 on one side can be turned with the axis of the hollow pipe of the support frame 72 as a turning center line through a stopper control mechanism 77 provided at the rear of the support frame 72, the connector 75 being provided with a stopper member 78 integrally.

That is, as shown in (A) and (C) of Fig. 23, the connector 75 is provided as a component separated from the support frame 72. The connector 75 is fixed, at its rear end, integrally to the forward end of the connecting shaft 79 extending, through the hollow support frame 72, to the stopper control mechanism 77.

The stopper member 78 consists of a cylindrical member 78a with a platelike stopper 78b fixed thereon integrally, and can be turned integrally with the connector 75, with the cylindrical member 78a fitted over the connector 75 and fastened with a bolt 78c.

The stopper control mechanism 77, as shown in (B) and (E) of Fig. 23, is provided with a cylindrical member 77a concentrically in a hollow space inside the support frame 72, and a circumferential elongated hole 80 is formed in the cylindrical pipe portion of the support frame 72. To the cylindrical member 77a is fixed one end of a lever 77b inserted into the hollow space of the support frame 72 through the elongated hole 80, a spring 81 being provided between the support frame 72 and the lever 77b. To the forward end of the cylindrical member 77a is fixed the rear end of the connecting shaft 79 integrally.

As for the relation between the stopper member 78 and the stopper control mechanism 77, as shown in (C) and (E) of Fig. 23, the lever 77b of the stopper control mechanism 77 is normally in the horizontal position because of the bias of the spring 81 as shown in a chain line in (E), and at this time the stopper 78b of the stopper member 78 is in the horizontal position as shown in a chain line in (C).

When the lever 77b is rised from this position to the vertical position shown in a solid line in (E) against the bias of the spring, the stopper member 78 is turned through the connecting shaft 79 and the connector 75, and the stopper 78b is moved to the vertical position shown in a solid line in (C).

According to the auxiliary device for a motor scooter of this embodiment described above, as shown in Fig. 19, when the battery box 30 housing defined by the housing frame 22 and the cover member 35 is held at the upwardly turned position and the connectors 75 and 76 are inserted into the rear ends of the housing frame 22, the housing frame 22 on the scooter and the support frame 72 on the auxilairy device 70 can be connected as a continuous rail portion.

At the time of this connecting operation, if the lever 77b of the stopper control mechanism 77 in the auxiliary device 70 is raised to the vertical position against the bias of the spring 81, the stopper 78b of the stopper member 78 is turned to a stop releasing position at the side face of the support frame 72 so that the rollers 32 of the battery box 30 are able to move, without resistance, on the continuous rail portion formed by the frames 22 and 72, whereby the battery box 30 housed on the motor scooter can be moved smoothly onto the support frame of the auxiliary device 70.

When the connectors 75 and 76 are pulled out from the rear ends of the housing frame 22 and the support frame 72 of the auxiliary device 70 is detached from the housing frame 22 after the battery box 30 has been transferred completely on to the support frame 72 of the auxiliary device 70, the lever 77b of the stopper control mechanism 77 in the auxiliary device 70 falls in the horizontal direction through the bias of the spring 81, and the stopper 78b of the stopper member 78b, associated with the movement of the lever 77b, is turned to a stopping position at the top face of the support frame 72.

As a result, the rollers 32 of the battery box 30 mounted on the support frame 72 are prevented from moving by the stopper 78b and the battery box 30 will not slip down from the support frame 22 after detachment so that the battery box 30 can be carried easily in a stable condition when the auxiliary device 70 is moved with the support frame 72 held in a horizontal position.

When the battery box 30 mounted on the auxiliary device 70 is unloaded from the auxiliary device 70 or putted again into the housing of the motor scooter, if the lever 77b of the stopper control mechanism 77 in the horizontal position is raised and the stopping state effected by the stopper 78b is released, the battery box 30 is moved by its own weight from the support frame 72 inclined downwardly toward the forward end so that handling operations can be performed very easily.

Even though the battery housing of the motor scooter is disposed at the low deck portion of the vehicle body, the batteries housed in the battery housing can be taken out and put in easily and in a relatively upward posture.

By the battery exchange device for the motor scooter the batteries can be exchanged smoothly. Moreover, the batteries can be transported from one place to another without difficulty.

## Claims

1. Battery powered motor scooter having
a low deck portion extending between the front and rear wheels of the scooter, and
a battery housing (22,35) in said low deck portion to receive at least one battery (31),
**characterized in that**
the battery housing (22,35) is mounted about a pivot (32) near its forward end, and provided with a battery entrance at its rear end to allow access to said at least one battery when the battery housing (22,35) takes an upwardly turned position, and that said battery housing (22, 35) is connected to a seat frame (21) carrying said seat (20) to rotate together.

2. Battery powered motor scooter according to claim 1, **characterized in that** a forward end of the seat frame (21) and a forward end of a housing frame (22) forming a part of said battery housing are both pivotably mounted in common to a main frame (2) of the motor scooter.

3. Battery powered motor scooter according to claim 2, **characterized in that** said seat frame (21) and said housing frame (22) are mounted to said main frame (2) at a bent portion where a downwardly extending portion of the main frame turns into a horizontally extending portion.

4. Battery powered motor scooter according to one of claims 1 to 3, **characterized in that** a battery box (30) carrying said at least one battery is slidably guided in said battery housing, the battery box being movable in and out through said battery entrance.

5. Battery powered motor scooter according to claim 4, **characterized in that** a longitudinal rail portion is provided in said battery housing (22, 35), said battery box (30) being supported on said rail portion through rollers (32).

6. Battery powered motor scooter according to one of claims 1 to 5, **characterized by** locking means to keep the battery housing in a normal condition and position holding means to temporarily lock the battery housing in the upwardly turned position.

7. Battery powered motor scooter according to one of claims 1 to 6, **characterized in that** an empty space is provided under said seat (20).

8. Battery powered motor scooter according to claim 7, **characterized in that** a storage bag (40) is attached to said seat (20) or said seat frame (21), said storage bag being disposed in said empty space.

9. Battery powered motor scooter according to one of claims 1 to 8, **characterized in that** a swing arm connects a rear wheel (10) to a body frame rearwardly of said low deck portion, and that a power unit (4) including a motor and a transmission are provided on said swing arm.

10. Battery exchange device to exchange the at least one battery in a motor scooter according to one of claims 1 to 9, **characterized in that** said battery exchange device comprises a movable carrier body (71) on which a support frame (72) is pivotably mounted, said support frame (72) having connecting means (75, 76) to detachably connect said support frame (72) to the rear end of said battery housing (22, 35).

11. Battery exchange device according to claim 10, **characterized in that** said support frame (72) comprises
a rail forming a continuous rail with said rail portion of said battery housing (22, 35) when said support frame (72) is connected to said battery housing, and a stopper (78b) which can be switched between a stopping position in which a battery box (31) is prevented from sliding along said rail, and a release position in which said battery box (31) can slide along said rail.

## Patentansprüche

1. Batteriegetriebener Motorroller, mit
einem unteren Bodenabschnitt hat, der sich zwischen den vorderen und hinteren Rädern des Rollers erstreckt
und
einem Batteriegehäuse (22, 35) in dem unteren Bodenabschnitt, um zumindest eine Batterie (31) aufzunehmen,
**dadurch gekennzeichnet, daß**
das Batteriegehäuse (22, 35) über ein Gelenk (32) nahe seinem vorderen Ende montiert ist und mit einem Batteriezugang an seinem hinteren Ende versehen ist, um den Zugang zu der zumindest einen Batterie zu erlauben, wenn das Batteriegehäuse (22, 35) eine nach oben gedrehte Position einnimmt, und daß das Batteriegehäuse (22, 35) mit einem Sitzrahmen (21) verbunden ist, der den Sitz (20) trägt, um sich zusammen zu drehen.

2. Batteriegetriebener Motorroller nach Anspruch 1, **dadurch gekennzeichnet, daß** ein vorderes Ende des Sitzrahmens (21) und ein vorderes Ende eines Gehäuserahmens (22), die einen Teil des Batteriegehäuses bilden, beide gemeinsam drehbar an einem Rahmen (2) des Motorrollers montiert sind.

3. Batteriegetriebener Motorroller nach Anspruch 2, **dadurch gekennzeichnet, daß** der Sitzrahmen (21) und der Gehäuserahmen (22) mit dem Hauptrahmen (2) an einem gekrümmten Abschnitt montiert sind, wo ein sich nach unten erstreckender Abschnitt des Hauptrahmens in einen sich horizontal erstreckenden Abschnitt übergeht.

4. Batteriegetriebener Motorroller nach einem der Ansprüche 1 bis 3, **dadurch gekennzeichnet, daß** ein Batteriekasten (30), der zumindest eine Batterie trägt, verschiebbbar in dem Batteriegehäuse geführt ist, wobei der Batteriekasten durch den Batteriezugang hinein und heraus bewegbar ist.

5. Batteriegetriebener Motorroller nach Anspruch 4, **dadurch gekennzeichnet, daß** ein Längsschienenabschnitt in dem Batteriegehäuse (22, 35) vorgesehen ist, wobei der Batteriekasten (30) auf dem Schienenabschnitt durch Rollen (32) gelagert ist.

6. Batteriegetriebener Motorroller nach einem der Ansprüche 1 bis 5, **gekennzeichnet durch** Feststellmittel, um das Batteriegehäuse in einem Normalzustand zu halten und Positionierungshaltemittel, um das Batteriegehäuse zeitweilig in einer nach oben gedrehten Position zu halten.

7. Batteriegetriebener Motorroller nach einem der Ansprüche 1 bis 6, **dadurch gekennzeichnet, daß** ein leerer Raum unter dem Sitz (20) vorgesehen ist.

8. Batteriegetriebener Motorroller nach Anspruch 7, **dadurch gekennzeichnet, daß** eine Vorratstasche (40) auf dem Sitz (20) oder dem Sitzrahmen (21) verbunde ist, wobei die Vorratstasche in dem leeren Raum vorgesehen ist.

9. Batteriegetriebener Motorroller nach einem der Ansprüche 1 bis 8, **dadurch gekennzeichnet, daß** ein Schwingarm ein Hinterrad (10) mit einem Fahrzeugrahmen hinter dem unteren Bodenabschnitt verbindet, und daß eine Antriebseinheit (4) einschließlich eines Motors und eines Getriebes auf dem Schwingarm vorgesehen sind.

10. Batteriewechselvorrichtung, um die zumindest eine Batterie in einem Motorrroller nach einem der Ansprüche 1 bis 9 auszutauschen, **dadurch gekennzeichnet, daß** die Batteriewechselvorrichtung einen beweglichen Trägerkörper (71) aufweist, auf dem ein Tragrahmen (72) schwenkbar montiert ist, wobei der Tragrahmen (72) eine Verbindungseinrichtung (75, 76) hat, um lösbar den Tragrahmen (72) mit dem hinteren Ende des Batteriegehäuses (22, 35) zu verbinden.

11. Batteriewechselvorrichtung nach Anspruch 10, **dadurch gekennzeichnet, daß** der Tragrahmen (72) eine Schiene, die eine durchgehende Schiene mit dem Schienenabschnitt des Batteriegehäuses (22, 35) bildet, wenn der Tragrahmen (72) mit dem Batteriegehäuse verbunden ist, und einen Anschlag (78b) aufweist, der zwischen einer Anschlagposition, in der ein Batteriekasten (31) am Gleiten entlang der Schiene gehindert wird, und eine Freigabeposition, in der der Batteriekasten (31) entlang der Schiene gleiten kann, umschaltbar ist.

## Revendications

1. Scooter à entraînement par batterie comportant :
une partie de tablier inférieur s'étendant entre la roue avant et la roue arrière du scooter, et
un logement de batterie (22, 35) situé dans ladite partie de tablier inférieur destiné à recevoir au moins une batterie (31),
**caractérisé en ce que**,
le logement de batterie (22, 35) est monté autour d'un pivot (32) situé à proximité de son extrémité avant, et comporte une entrée de batterie située à son extrémité arrière, afin de permettre l'accès à ladite au moins une batterie, lorsque le logement de batterie (22, 35) est mis dans une position dirigée vers le haut, et **en ce que** ledit logement de batterie (22, 35) est connecté à un châssis de selle (21) qui supporte ladite selle (20) afin qu'ils tournent ensemble.

2. Scooter à entraînement par batterie selon la revendication 1, **caractérisé en ce qu'**une extrémité avant du châssis de selle (21) et une extrémité avant d'un châssis de logement (22) formant une partie dudit logement de batterie sont toutes deux montées en commun en pivot sur le cadre principal (2) du scooter à moteur.

3. Scooter à entraînement par batterie selon la revendication 2, **caractérisé en ce que** ledit châssis de selle (21) et ledit châssis de logement (22) sont montés sur ledit cadre principal (2) sur une partie recourbée dans laquelle une partie du cadre principal s'étendant vers le bas devient une partie s'étendant horizontalement.

4. Scooter à entraînement par batterie selon l'une des revendications 1 à 3, **caractérisé en ce qu'**un carter de batterie (30) supportant ladite au moins une batterie est guidé en coulissement dans ledit logement de batterie, le carter de batterie pouvant être déplacé dans et hors de ladite entrée de batterie.

5. Scooter à entraînement par batterie selon la revendication 4, **caractérisé en ce qu'**il est fourni une partie de rail longitudinale dans ledit logement de batterie (22, 35), ledit carter de batterie (30) étant supporté par ladite partie de rail au moyen de galets (32).

6. Scooter à entraînement par batterie selon l'une des revendications 1 à 5, **caractérisé par** des moyens de verrouillage destinés à maintenir le logement de batterie dans une condition normale et par des moyens de maintien destinés à verrouiller temporairement le logement de batterie dans une position dirigée vers le haut.

7. Scooter à entraînement par batterie selon l'une des revendications 1 à 6, **caractérisé en ce qu'**un espace libre est fourni sous ladite selle (20).

8. Scooter à entraînement par batterie selon la revendication 7, **caractérisé en ce qu'**un bac de rangement (40) est fixé sur ladite selle (20) ou sur ledit châssis de selle (21), ledit bac de rangement étant disposé dans ledit espace libre.

9. Scooter à entraînement par batterie selon l'une de revendications 1 à 8, **caractérisé en ce qu'**un bras oscillant relie la roue arrière (10) à un corps de châssis vers l'arrière de ladite partie de tablier inférieur, et **en ce qu'**un groupe motopropulseur (4) comprenant un moteur et une transmission est disposé sur ledit bras oscillant.

10. Dispositif d'échange de batterie destiné à échanger la au moins une batterie dans un scooter selon l'une des revendications 1 à 9, **caractérisé en ce que** ledit dispositif d'échange de batterie comprend un corps de support mobile (71) sur lequel un châssis de support (72) est monté en pivotement, ledit châssis de support (72) comportant des moyens de connexion (75, 76) destinés à connecter de manière amovible ledit châssis de support (72) à l'extrémité arrière dudit logement de batterie (22, 35).

11. Dispositif d'échange de batterie selon la revendication 10, **caractérisé en ce que** ledit châssis de support (72) comprend un rail formant un rail en continuité avec ladite partie de rail dudit logement de batterie (22, 35), lorsque ledit châssis de support (72) est connecté au dit logement de batterie, et un dispositif d'arrêt (78b) qui peut être commuté entre une position d'arrêt dans laquelle un carter de batterie (31) est empêché de glisser le long dudit rail, et une position de libération dans laquelle ledit carter de batterie (31) peut glisser le long dudit rail.
